# EUROPEAN PATENT APPLICATION

(11) **EP 3 702 933 A1**
(43) Date of publication of application: **02.09.2020**
(21) Application number: 19160109.5
(22) Date of filing: 28.02.2019
(51) Int. Cl.: G06F 16/2455

(54) **SYSTEM FOR ANALYZING AND INTERPRETING AT LEAST ONE DATA STREAM AS WELL AS METHOD OF TAGGING DATA FRAGMENTS**

(71) Applicant: Rohde & Schwarz GmbH & Co. KG, 81671 München (DE)
(72) Inventor: KRUEGER, Martin, 81671 München (DE); GEIER, Jens, 81671 München (DE); VIEWEGER, Jens, 81671 München (DE); FINSTERBUSCH, Michael, 81671 München (DE); WEIDE, Joerg, 81671 München (DE)
(74) Representative: Prinz & Partner mbB

(57) **Abstract**

A system (10) for analyzing and interpreting at least one data stream comprises at least one extraction module (28) having at least one decoder unit (34) and a tagging unit (36). The decoder unit (34) is configured to decode data fragments of the data stream. The tagging unit (36) is configured to tag the data fragments based on a unitary tagging data model. The extraction module (28) is configured to output data fragments with a tag. The tag defines a relation between data fragments. Further, a method of tagging data fragments is describe.

## Description

The invention relates to a system for analyzing and interpreting at least one data stream. Further, the invention relates to a method of tagging data fragments.

In current network traffic processing systems, data streams comprise several events that contain data, also called data fragments, wherein the events are processed individually and independently of each other without any linkage between the events processed. Thus, no conclusion can be drawn whether the respective data of the several events is linked with each other or not, as the data is processed individually and independently of each other.

Moreover, the systems use a data model that is decoder specific so that each decoder type requires its own data model. In fact, the values of the data, namely the decoded values, are of semantic type. Therefore, it is not possible to link data decoded by different decoder types. Put another way, a single value decoded from the data stream does not have a defined relationship to another value. Thus, only the order of the values may be of importance.

In fact, the data is streamed continuously so that certain matching information may hit a rule engine too late, which in turn requires a memory consuming aggregation within the decoder. Furthermore, the aggregation may be done in the decoder only in parts. Thus, certain information might be missed due to the limited memory capacities.

To avoid this risk, the decoder that receives and processes the data streams has to keep all information gathered until the end of the respective data flow occurred. However, this concept still requires high memory capacities that increase the overall costs of the system.

Accordingly, there is a need for a simple way to analyze and interpret at least one data stream in a cost-efficient manner.

The invention provides a system for analyzing and interpreting at least one data stream. The system comprises at least one extraction module having at least one decoder unit and a tagging unit. The decoder unit is configured to decode data fragments of the data stream. The tagging unit is configured to tag the data fragments based on a unitary tagging data model. The extraction module is configured to output data fragments with a tag. The tag defines a relation between data fragments.

The invention further provides a method of tagging data fragments assigned to a data stream, with the following steps:
- Decoding data fragments of a data stream by using a decoder unit,
- Tagging the data fragments based on a unitary tagging data model by using a tagging unit, and
- Outputting data fragments with a tag that defines a relation between data fragments

Accordingly, the data fragments are tagged based on the unitary tagging data model, also called unitary tagging data structure, in order to put the data fragments in relation with each other. Thus, the data fragments are not processed individually and independently of each other. Put another way, knowledge with regard to the individual data fragments is gathered that can be used for further processing the data fragments, for instance when aggregating the individual data fragments.

According to an aspect, the extraction module comprises a plurality of decoder units. The decoder units may be used to identify and extract data fragments of different data streams. For instance, the decoder units are established differently resulting in different types of decoder units.

Particularly, the tagging unit is assigned to the plurality of decoder units, wherein the tagging unit is configured to tag the data fragments of different data streams decoded by the plurality of decoder units. Therefore, the unitary tagging data model or rather the unitary tagging data structure applies for different kind of data streams such that these data fragments can be handled appropriately.

The tagging unit may be configured to apply the tagging data model to the data fragments of the different data streams decoded by the plurality of decoder units. The single data fragments obtained from the different data streams are tagged in a similar manner, as the unitary tagging data model/structure is used by the tagging unit.

Moreover, the tagging data model may be adapted for every decoder unit. For instance, the tagging data model comprises information with regard to the decoder identity (decoder ID) that is unique for each decoder unit. The decoder ID relates to a unique number identifying the respective decoder.

In fact, the tag may relate to so-called context information.

Another aspect provides that the data fragments are application data fragments and/or that the at least one decoder unit is configured to decode different application protocols. The data streams processed, namely the data fragments related thereto, may relate to different applications. The respective decoder unit is enabled to decode different protocols. Otherwise, several decoder units are provided wherein each decoder unit is configured to decode at least one (application) protocol.

Further, the extraction module may have an input and an output, wherein the extraction module is configured to receive different data streams via the input, and wherein the extraction module is configured to output tagged data fragments via its output. As already mentioned, the extraction module may comprise several decoder units. Hence, the extraction module is enabled to process different data streams. In fact, the different data streams are forwarded to the respective decoder unit for decoding purposes.

According to another aspect, the extraction module is configured to output at least one single data fragment including structure data. The structure data is inter alia provided by the tag. Hence, information with regard to the relation of the respective data fragment is also outputted by the extraction module.

Particularly, the extraction module is configured to output a plurality of single data fragments including structure data, wherein relationships between the single data fragments are defined in the corresponding structure data. The single data fragments are put in relation to each other such that information with regard to their relations is obtained.

Another aspect provides that a unitary format of structure data is identical for different data streams and/or that the unitary format corresponds to a data tree format or a data graph. The same format of structure data is used for different data streams such that their respective data fragments can be handled in a similar manner. The unitary format may generally correspond to a data tree format or rather data graph providing information with regard to parent relations or rather sibling relations of the respective data fragments.

Furthermore, the extraction module may comprise a rule engine that is configured to forward data fragments including at least structure data which fulfill certain criteria. Hence, the data fragments forwarded are analyzed and only forwarded if they will fulfill predefined criteria. These predefined criteria may relate to a certain value of a data field.

Particularly, the rule engine is configured to forward data fragments including structure data and input data stream which fulfill certain criteria. Thus, the structure data may also be analyzed such that the respective data fragments including the structure data are only forwarded by the rule engine if the structure data will fulfill predefined criteria.

According to another aspect, the extraction module is configured to output a single message encompassing several data fragments with partially identical structure data. The partially identical structure data may relate to a decoder ID or rather a context type vector prefix of a context type vector that defines the relations of data fragments with each other.

The data fragments outputted may be streamed continuously and/or the data fragments outputted may be not buffered. The data fragments outputted by the extraction module are directly forwarded to the aggregation module such that the respective data can be aggregated directly.

Particularly, the data fragments outputted are assigned to a context vector. The context provides information with regard to the relation of the data fragments assigned thereto.

The data fragments outputted may relate to an output protocol that corresponds to a serial protocol. The outputted signal can be processed in a simple manner, in particular by the aggregation module. Moreover, the serial protocol ensures that the aggregation module is enabled to communicate with two or more extraction modules.

Generally, the data fragments may correspond to application data fragments in the respective data stream.

Thus, the at least one decoder unit may be configured to decode different application protocols.

The data streams may be internet protocol data streams, for instance data streams assigned to Voice over Internet Protocol (VoIP), also called IP telephony, e-mail and/or hypertext transfer protocol (http).

The extraction module may receive different data streams, wherein tagged data fragments are outputted. The tagged data fragments including the structure data are forwarded to the aggregation module for aggregating the data fragments.

In fact, the decoder unit may define the unitary tagging data model or rather the unitary tagging data structure, wherein the unitary tagging data structure is announced by the decoder unit.

The unitary tagging data model or rather the unitary tagging data structure may generally relate to contexts, data fields and relations.

The unitary tagging data model/structure may comprise context identifications (context IDs) that are globally unique. This ensures that the context IDs can be assigned in an unambiguous manner.

The decoder unit of the extraction module may stream the different data fields as they become available.

The data fields originating from the same decoder unit may have a common root context, which identifies the processing decoder unit.

Accordingly, a system may be provided that is configured to look for certain information and to spit out everything related to it in a structured way. Hence, a system may be provided that is configured to retrieve data fragments, for instance metadata, content and/or raw data, from monitored data, namely data streams, related to at least one matching rule in a structured way. In fact, the system may use a rule engine to structure the data in accordance with the at least one matching rule.

Therefore, an event based data processing model, also called context data model, may be provided that is used by the system.

Accordingly, the system for analyzing and interpreting at least one data stream may correspond to a network traffic processing system.

Generally, all aspects described above apply for the system as well as the method in a similar manner.

The foregoing aspects and many of the attendant advantages of the claimed subject matter will become more readily appreciated as the same become better understood by reference to the following detailed description, when taken in conjunction with the accompanying drawings, wherein:
- Figure 1 schematically shows an overview of a system for analyzing and interpreting at least one data stream,
- Figure 2 schematically shows an overview of a unitary tagging data model,
- Figure 3 schematically shows another overview of the unitary tagging data model shown in Figure 2,
- Figure 4 schematically shows data processing by the extraction module and the aggregation module of the system shown in Figure 1,
- Figure 5 schematically shows data processing by the aggregation module in more detail, and
- Figure 6 schematically shows an aggregation example.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

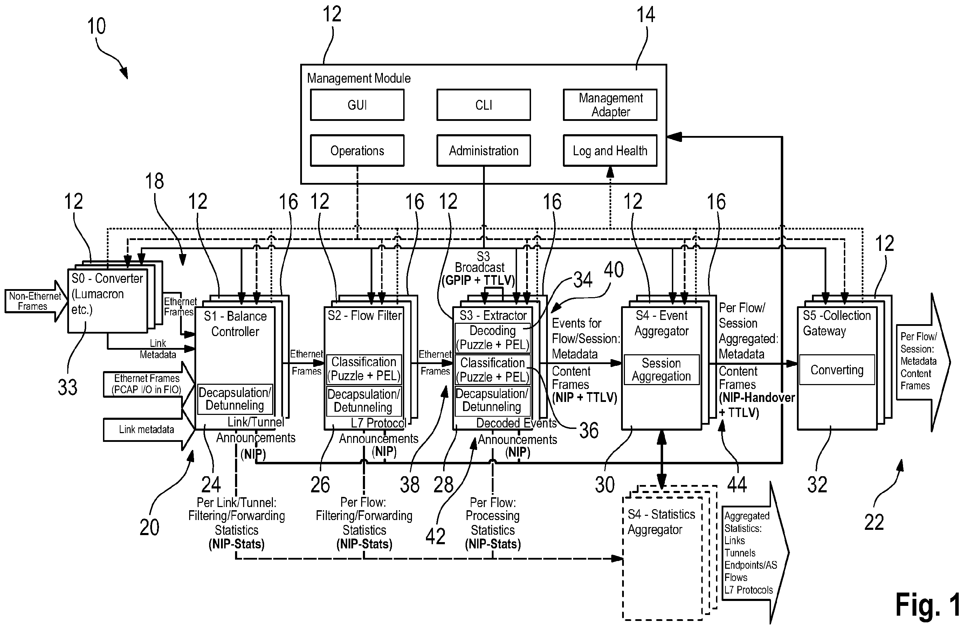

Figure 1 shows a system 10 that is configured to analyze and interpret at least one data stream, wherein the data stream processed by the system 10 comprises data, for instance metadata, raw data and/or content.

The system 10 comprises a plurality of modules 12, namely a management module 14 as well as several data processing modules 16.

The data processing modules 16 are arranged in a serial module chain 18 that has an input 20 and an output 22.

The input 20 of the module chain 18 is configured to receive data of the data streams, also called interception data, whereas the output 22 of the module chain 18 is configured to output structured interception data.

Therefore, the several data processing modules 16 assigned to the serial module chain 18 are configured to structure the interception data received via the input 20.

In the shown embodiment, the data processing modules 16 comprise at least one balance controller module 24, at least one flow filter module 26, at least one extraction module 28 as well as at least one aggregation module 30.

These different modules 24 - 30 are connected in series with each other. Hence, the at least one extraction module 28 is directly connected with the at least one aggregation module 30.

In fact, each kind of module 24 - 30 is provided several times defining a certain processing layer S1 - S4.

Moreover, at least one collection gateway module 32 as well as at least one converter module 33 may be provided that are located downstream and upstream of the serial module chain 18, respectively.

The upstream located converter module 33 may receive non-Ethernet frames that are converted into Ethernet frames and Link metadata which is inputted in the serial module chain 18 together with the Ethernet frames and the Link metadata as shown in Figure 1.

The collection gateway module 32 receives aggregated data fragments from the aggregation module 30 as will be described later.

In fact, the at least one collection gateway module 32 as well as at least one converter module 33 may also be provided several times defining processing layers S0, S5.

For processing the data of the data streams, the extraction module 28 has at least one decoder unit 34 as well as a tagging unit 36.

The decoder unit 34 is configured to decode data fragments of the data stream received, namely the interception data. In other words, the respective decoder unit 34 identifies and extracts data fragments from the data stream processed by the extraction module 28.

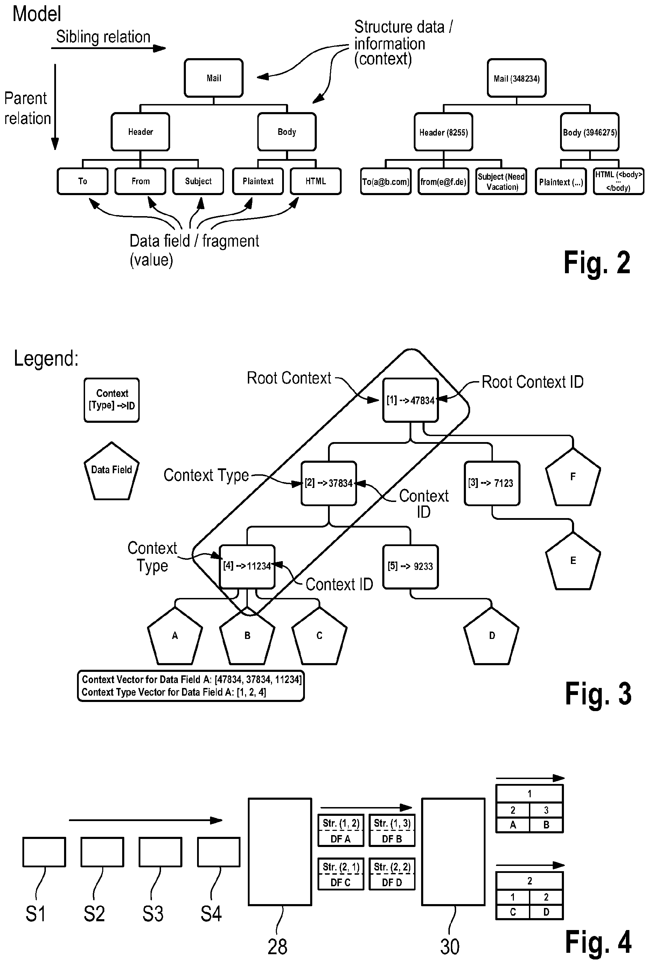

The tagging unit 36 of the respective extraction module 28 is configured to tag the data fragments decoded based on a unitary tagging data model, also called unitary tagging data structure, that is schematically shown in Figure 2.

Accordingly, the extraction module 28 is configured to output extracted data fragments that were initially encompassed within the data stream. The extracted data fragments comprise a tag according to the unitary tagging data model/structure, which defines a relation between data fragments.

As shown in Figure 1, a plurality of decoder units 34 are provided that are generally configured to process different data streams. The plurality of decoder units 34 may be assigned to dedicated extraction modules 28.

In turn, the tagging unit 36 is assigned to the plurality of decoder units 34 such that the tagging unit 36 is configured to tag data fragments of different data streams that were decoded by the plurality of decoder units 34 previously. Hence, the respective tags define a relation between data fragments originating from different data streams.

Accordingly, a single tagging unit 36 may be provided. Alternatively, one tagging unit 36 per extraction module 28 is provided.

In fact, the tagging unit 36 that uses the unitary tagging data model/structure is generally configured to apply this tagging data model to the data fragments of the different data streams decoded by the plurality of decoder units 34.

If necessary, the unitary tagging data model may be adapted for every decoder unit 34 individually. This depends on the decoder unit 34 as well as the intended use. In fact, the tag may comprise information with regard to the respective decoder unit 34, namely a decoder identification (decoder ID).

Generally, the data fragments may correspond to application data fragments that are processed by the system 10. Thus, the at least one decoder unit 34 may be configured to decode different application protocols. Moreover, several decoder units 34 may be provided that are assigned to a certain (application) protocol.

As the extraction module 28 is located within the module chain 18, the extraction module 28 has its own input 38 as well as its own output 40.

The extraction module 28 receives via its input 38 different data streams, particularly Ethernet frames, that are processed by the extraction module 28 as described above, namely by using the at least one decoder unit 34 as well as the tagging unit 36. Thus, the extraction module 28 outputs via its output 40 tagged data fragments for further processing, particularly metadata, content and frames.

As described above, the extraction module 28 is directly connected with the aggregation module 30. Thus, the aggregation module 30 receives the tagged data fragments from the extraction module 28 for aggregation purposes.

Since the extraction module 28 applies the unitary tagging data model on the data fragments, at least one single data fragment ("DF") is outputted that includes structure data ("Str."), as indicated in Figure 4, for instance. The structure data ("Str.") may be assigned to the unitary tagging data model/structure applied, which is shown in Figures 2 and 3 for an example concerning e-mail data.

In general, the extraction module 28 is configured to output a plurality of single data fragments ("DF") each including structure data ("Str."), wherein relationships between the single data fragments are defined by the corresponding structure data.

As shown in Figure 2, the tagging data model/structure provides different types of relations, namely sibling relation as well as parent relation.

The sibling relation may correspond to different information that relates to an e-mail header such as addressee ("to"), sender ("from") and/or subject.

The parent relation may correspond to the relation of data fragments with regard to the hierarchy such as "Addressee ("to") - Header - Mail", "Sender ("from") - Header - Mail" and/or "Subject - Header - Mail".

Each of the above mentioned data fragments are assigned to values that may be of semantic type (addressee ("to"), sender ("from") and/or subject) and/or data type (string, number, Boolean and so on).

The unitary tagging data model/structure applied provides a structure that may put values assigned to data fields or rather data fragments in relation to each other, wherein the structure data/information corresponds to the above-mentioned context.

For instance, the unitary tagging data model/structure used comprises a unique identifier for a specific context identification (ID) and a type of context that defines how to interpret a data fragment associated with it, as shown in Figures 2 and 3.

In the shown example of Figure 2, the unitary tagging data model/structure is shown for e-mail data that comprises context (structure data) which relates to the mail, the header as well as the body, whereas the data fragments are assigned to data fields associated with the header or rather the body.

Figure 3 shows that the respective structure of the data fragments can be described by vectors, namely context vector or rather context type vectors.

In the shown example of Figure 3, the data fragment/field with value "A" is described by the context vector [47834, 37834, 11234] as well as the context type vector [1, 2, 4].

Therefore, each single data fragment has a corresponding structure data (context) wherein the structure data may be defined by the respective vectors.

As shown in Figures 2 and 3, the structure data corresponds to a data tree format or a data graph.

The unitary format used may be identical for different data streams processed by the system 10.

The extraction module 28 that processes several data streams may output several data fragments with at least partially identical structure data within one message that is forwarded to the aggregation module 30.

As shown in Figure 3, the data fragments assigned to the values "A", "B", "C" may have partially identical structure data as they are assigned to the same context vector [47834, 37834, 11234, as well as the same context type vector [1, 2, 4], as the respective data fragments relate to header information, namely the same context.

Figure 3 also reveals that a root context as well as a root context ID are provided, which refer to the first element of the respective vector. In fact, this indicates the respective instance.

The data fragments may be outputted by the extraction module 28 continuously such that the tagged data fragments are directly forwarded or rather streamed without any buffering.

Furthermore, a rule engine 42 may be provided, particularly integrated in the extraction module 28.

The rule engine 42 forwards the (extracted) data fragments including the structure data to the aggregation module 30 for further processing if certain criteria will be fulfilled.

In fact, the rule engine 42 is configured to forward the data fragments including the structure data and input data stream, namely the raw data, to the aggregation module 30 for further processing if certain criteria will be fulfilled.

The aggregation module 30 is configured to receive the outputted data fragments from the extraction module 28, namely the data fragments including the structure data as described above.

For further processing, the aggregation module 30 is configured to aggregate the data fragments received according to one predefined structure data for different protocols, data streams and/or decoder units 34 that are assigned to the at least one extraction module 28.

This concept is schematically shown in Figure 4 wherein four different data packages S1 to S4 are received by the extraction module 28 and processed appropriately such that data fragments ("DF") including structure data ("Str.") are outputted by the extraction module 28 in an already structured manner.

The data fragments ("DF") including structure data ("Str.") are forwarded to the aggregation module 30 for aggregation.

The aggregation module 30 is configured to aggregate the data fragments ("DF") including structure data ("Str.") according to one predefined structure data as shown in Figure 4.

Hence, the structure data ("Str.") of the data fragments ("DF") influence the aggregation done by the aggregation module 30.

The predefined structure data may relate to different protocols, data streams and/or decoder units 34 assigned to the at least one extraction module 28.

The aggregation module 30 comprises at least one output 44 via which the aggregated data fragments, namely the data fragments including structure data processed by the aggregation module 30, are outputted as shown in Figures 1 and 4. Hence, aggregated metadata, content and/or frames are outputted.

Generally, the aggregation module 30 may have several outputs such that different aggregated data fragments may be outputted via the outputs 44 wherein the output data comprise at least in parts identical data.

The aggregated data fragments are typically outputted together with corresponding raw data from the respective data stream inputted in the extraction module 28. Hence, the data of the data streams is outputted by the aggregation module 30, namely the respective data fields ("DF") or rather their values as shown in Figure 4.

In general, the aggregation module 30 may convert the data fragments received into a different (application) protocol with respect to the receiving (application) protocol. This may simplify further processing of the aggregated data fragments, for instance by the collection gateway module 32.

The receiving protocol used for communication between the extraction module 28 and the aggregation module 30 may generally be compatible to at least two different types of decoder units 34.

Thus, at least two different types of decoder units 34 may be used for processing different data streams wherein the decoded data fragments are forwarded to the aggregation module 30.

Hence, the aggregation module 30 is configured to receive the tagged data fragments from at least two different types of decoder units 34 that may be assigned to at least two different extraction modules 28.

Accordingly, the tagged data fragments may relate to the unitary data model/structure even though they were identified and extracted by different extraction modules 28, particularly different types of decoder units 34.

Hence, the different data streams may be processed by different extraction modules 28, wherein the aggregation module 30 is configured to combine the tagged data fragments received from the different extraction modules 28 to one single session data that is outputted.

The aggregation module 30 is configured to output the single session data that encompasses the tagged data fragments extracted and tagged by the at least two different extraction modules 28.

In general, each extraction module 28 processes the data streams in a manner as described above, wherein the unitary data model/structure is applied that might be adapted with regard to the decoder identification (decoder ID) as already mentioned, which identifies the respective decoder unit 34 in a unique manner.

Anyway, multi data flows, namely different data streams, that relate to different (application) protocols can be processed by the different extraction modules 28 or rather the decoder units 34, which ensures a higher scalability since the information gathered, namely the data, is distributed among the extraction modules 28 or rather the decoder units 34. The scalability can be improved up to Tbit/s.

For instance, Sessions Initiation Protocol (SIP) data packets, namely a first data stream, may arrive which are processed by the at least one extraction module 28. Respective correlation information concerning the data stream arrived may be broadcasted among different extraction modules 28, namely within the processing layer S3.

For this purpose, the respective decoder units 34 of the at least one extraction module 28 may share relevant correlation information, for instance via broadcast mechanism.

Then, Real-Time Transport Protocol (RTP) data packets, namely a second data stream, may arrive that are also processed by the at least one extraction module 28, namely within the processing layer S3.

The rule engine 42 may relate to forwarding context if RTP data packets and SIP data packets arrive.

If the rule provided by the rule engine 42, namely the respective criteria, is fulfilled, at least the context is forwarded to the subsequent aggregation module 30, namely processing layer S4.

Irrespective of the number of decoder units 34 or rather extraction modules 28, the aggregation module 30 is configured to aggregate the data fragments received for a predefined time.

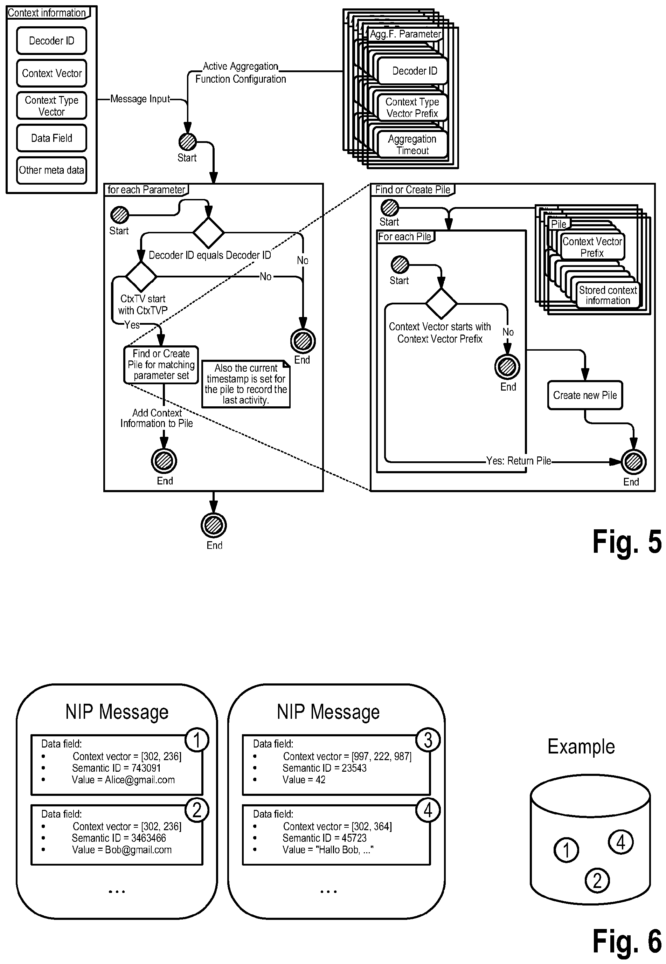

Figure 5 shows that the data fragments including the structure data are assigned to context information which groups all information together.

For instance, the context information encompasses the decoder identification (decoder ID), the context vector, the context type vector, the data field type, the data field value as well as the rule ID and the mandate ID, which trigger the forwarding of the data field from the extraction module 28 to the aggregation module 30. As already mentioned above, the context vector as well as the context type vector relate to the structure data that provides relative information with regard to the respective data fragment.

The aggregation module 30 is configured to apply an aggregation function on the context information, wherein the aggregation function comprises aggregation function parameters as illustrated in Figure 5.

As shown, the aggregation function parameters relate to the decoder identification (decoder ID), the context type vector prefix as well as the aggregation timeout relating to the predefined time. Hence, the aggregation function parameters relate to a tuple of values as indicated above.

The aggregation module 30 is configured to create at least one pile for a matching parameter set while processing the aggregation function as well as the context information.

In other words, the matching condition of the aggregation function is assigned to the decoder ID and the context type vector prefix (CtxTVP) being part of the context type vector (CtxTV).

Thus, parameters are assigned to a single pile that have matching parameters, particularly matching decoder identification and context type vector prefix.

As also shown in Figure 5, the respective pile comprises at least one data field with common context vector prefix. Moreover, secondary data like rule ID and/or mandate ID may be assigned to the respective pile.

Thus, the aggregation module 30 is configured to output aggregated data fragments that are structured, namely by piles that relate to the respective structure data such as context type vector and context vector.

Figure 6 shows an example for aggregation wherein a decoder type corresponds to a "Mail-Decoder", the context type vector prefix is equal to "Mail" and the aggregation timeout corresponds to "30 seconds".

As shown, the data fields assigned to "1", "2" and "4" are aggregated, as the data field indicated with "3" has a different context vector prefix.

According to another example (not shown), the context type vector prefix may be equal to "Mail - Header". Then, the data fields assigned to "1" and "2" would only be aggregated, as the context vector of data field labelled with "4" is assigned to the context vector [302, 364] corresponding to the context type vector prefix "Mail - Body".

Apart from the data processing modules 16 and their functionality described in detail above, the system 10 comprises the management module 14.

The serial module chain 18 processes the data only in direction from its input 20 to its output 22.

Each of the data processing modules 16 in the serial module chain 18 provides capability information that is used in data flow direction for configuring the following data processing modules 16. In other words, each of the data processing modules 16 announces information with regard to its own capability. The respective information is forwarded/distributed in data flow direction such that subsequent data processing modules 16 obtain the respective information.

Each data processing module 16 that receives the respective capability information of one of the previous data processing modules 16 is configured to adjust its own capability based on the capability information received from the previous one.

Generally, the respective capability information may relate to semantic information and/or processing information.

In fact, replacing one of the several data processing modules 16 within the serial module chain 18 does not require to reconfigure the whole system 10 manually since the respective capability information of the new several data processing module(s) 16 is distributed to the subsequent data processing modules 16 effectively.

Hence, an automatic reconfiguration of the system 10 is achieved, as the system 10 is modular.

This means that the data processing modules 16 can be interchanged or rather replaced without the need for manual reconfiguration, as the reconfiguration of the system 10 is automatically done by the data processing modules 16 themselves announcing their respective capability information.

The respective capability information announced is received by the subsequent data processing modules 16 that adapt their settings appropriately with regard to the capability information announced such that a reconfiguration of the whole system 10 takes place.

As the management module 14 is connected to the serial module chain 18, in particular each of the several data processing modules 16, the management module 14 also receives the respective capability information of each data processing module 16.

The management module 14 has a graphical user interface (GUI), wherein the management module 14 is enabled to adjust the respective graphical user interface based on the capability information received from the data processing module(s) 16.

Accordingly, the user interface is adapted to the current capability of the whole system 10.

Furthermore, the management module 14 may receive log and health information from the several data processing module(s) 16 that may be processed by the management module 14.

In addition, the management module 14 controls the several data processing module(s) 16 based on the log and health information and/or the capability information received from the data processing module(s) 16.

Generally, all aspects described above apply for the system 10 as well as the method in a similar manner.

## Claims

1. A system (10) for analyzing and interpreting at least one data stream, wherein the system (12) comprises at least one extraction module (28) having at least one decoder unit (34) and a tagging unit (36), wherein the decoder unit (34) is configured to decode data fragments of the data stream, wherein the tagging unit (36) is configured to tag the data fragments based on a unitary tagging data model, wherein the extraction module (28) is configured to output data fragments with a tag, and wherein the tag defines a relation between data fragments.

2. The system (10) according to claim 1, wherein the at least one extraction module (28) comprises a plurality of decoder units (34).

3. The system (10) according to claim 2, wherein the tagging unit (36) is assigned to the plurality of decoder units (34), and wherein the tagging unit (36) is configured to tag the data fragments of different data streams decoded by the plurality of decoder units (34), in particular wherein the tagging unit (36) is configured to apply the tagging data model to the data fragments of the different data streams decoded by the plurality of decoder units (34).

4. The system (10) according to claim 2 or 3, wherein the tagging data model is adapted for every decoder unit (34).

5. The system (10) according to any of the preceding claims, wherein the data fragments are application data fragments and/or wherein the at least one decoder unit (34) is configured to decode different application protocols.

6. The system (10) according to any of the preceding claims, wherein the extraction module (28) has an input (38) and an output (40), wherein the extraction module (28) is configured to receive different data streams via the input (38), and wherein the extraction module (28) is configured to output tagged data fragments via its output (40).

7. The system (10) according to any of the preceding claims, wherein the extraction module (28) is configured to output at least one single data fragment including structure data.

8. The system (10) according to claim 7, wherein the extraction module (28) is configured to output a plurality of single data fragments including structure data, wherein relationships between the single data fragments are defined in the corresponding structure data.

9. The system (10) according to any of the preceding claims, wherein a unitary format of structure data is identical for different data streams and/or wherein the unitary format corresponds to a data tree format or a data graph.

10. The system (10) according to any of the preceding claims, wherein the extraction module (28) comprises a rule engine (42) that is configured to forward data fragments including at least structure data which fulfill certain criteria.

11. The system (10) according to claim 10, wherein the rule engine (42) is configured to forward data fragments including structure data and input data stream which fulfill certain criteria.

12. The system (10) according to any of the preceding claims, wherein the extraction module (28) is configured to output a single message encompassing several data fragments with partially identical structure data.

13. The system (10) according to any of the preceding claims, wherein the data fragments outputted are streamed continuously and/or the data fragments outputted are not buffered.

14. The system (10) according to any of the preceding claims, wherein the data fragments outputted are assigned to a context vector and/or wherein the data fragments outputted relate to an output protocol that corresponds to a serial protocol.

15. A method of tagging data fragments assigned to a data stream, with the following steps:
- Decoding data fragments of a data stream by using a decoder unit,
- Tagging the data fragments based on a unitary tagging data model by using a tagging unit, and
- Outputting data fragments with a tag that defines a relation between data fragments.
